Europäisches Patentamt

(19) European Patent Office

Office européen des brevets

(11) Publication number: **0 291 483 B1**

(12) # EUROPEAN PATENT SPECIFICATION

(45) Date of publication of patent specification:
**13.11.91 Bulletin 91/46**

(21) Application number: **88850162.4**

(22) Date of filing: **10.05.88**

(51) Int. Cl.⁵: **B65B 11/04, B65H 23/08**

(54) **Pre-stretcher device for controlling the supply of a stretchable plastics film web.**

(30) Priority: **13.05.87 NO 871987**

(43) Date of publication of application:
**17.11.88 Bulletin 88/46**

(45) Publication of the grant of the patent:
**13.11.91 Bulletin 91/46**

(84) Designated Contracting States:
**DE FR GB IT SE**

(56) References cited:
**DE-A- 2 750 780**
**FR-A- 792 613**
**GB-A- 968 594**
**US-A- 4 050 221**

(73) Proprietor: **KVERNELAND UNDERHAUG A/S**
**P.O. Box 70**
**N-4350 Naerbo (NO)**

(72) Inventor: **Royneberg, Erling**
**N-4350 Naerbo (NO)**

(74) Representative: **Orr, William McLean**
**URQUHART-DYKES & LORD 5th Floor, Tower**
**House Merrion Way**
**Leeds West Yorkshire, LS2 8PA (GB)**

## Description

This invention relates to a pre-stretcher device for controlling the supply of a stretchable plastics film web from a supply reel prior to wrapping of the web around an object.

The invention has been developed in connection with the wrapping of straw feed bales with plastics sheet in order to preserve the feed material. In the wrapping of bales, it is known to place the bale on a carrier which rotates the bale about its longitudinal axis, while at the same time the carrier is rotated about a vertical axis. A plastics film web is withdrawn from a supply reel and has its leading end attached to the bale, and during the combined rotation of the bale about horizontal and vertical axes, the web is withdrawn from the reel and wound around the bale to apply wrapping thereon. In this manner, the bale is gradually provided with overlapping layers of the plastics film web until wrapping is completed.

As an alternative to providing a fixed mounting for the film reel, and combined rotations of the bale about horizontal and vertical axes, it is possible to provide an arrangement in which the bale is only rotated about its own longitudinal axis on its carrier, but the carrier does not rotate about the vertical axis, and the film reel is caused to orbit around the bale in the manner of a "satellite".

Both of these wrapping methods are employed in order to wrap bales of feed material. Reference may be had, by way of example, to GB-A-2159489A, US-A-4281500 and GB-A-2056401A.

It also known from FR-A-792613 to provide an apparatus for braking and flattening a web of paper sheet which is being withdrawn from a paper sheet supply reel. It is also disclosed that this apparatus may be used for materials other than paper. The apparatus comprises a support, an arm pivotally mounted at one end on the support to move about a pivot axis substantially parallel to the longitudinal axis of the reel and in a direction towards the reel axis as the reel reduces in diameter, and a freely rotatable roller mounted on the free end of the arm and arranged so that a web can be withdrawn from the reel and be taken at least partly around the roller during travel of the web along a path from the reel to the object to be wrapped by the web, and with the roller being driven by the web during operation and tending to be moved in a direction towards the axis of the reel. There is also disclosed a brake shoe mounted on the arm at a position intermediate the pivot axis of the arm and the freely rotatable roller, this brake shoe applying a braking action to the outer periphery of the reel as it rotates.

In the wrapping of bales of feed material with stretchable plastics film, a problem which arises is concerned with the desirability of achieving an approximately constant pulling force on the portion of the web as it leaves the reel prior to application of the web in overlapping layers around the object to be wrapped. Evidently, with a simple friction action applied directly to the outer periphery of the reel e.g. in the manner applied by the brake shoe in FR-A-792613, the braking torque applied to the reel will decrease with reduction in the diameter of the reel as the web is withdrawn, and therefore the pulling force applied to the web as it travels from the outer periphery of the reel to the roller also will vary. This will result in a variable prestretching action applied to the film, which is clearly undesirable.

Thus, stretchable plastics film web of the type developed for use in wrapping bales of feed material has the undesirable property that the width of the web can undergo substantial reduction as it leaves the supply reel and until it comes into contact with the body to be wrapped, depending upon the size of the pulling force, and therefore on how much it is prestretched in the longitudinal direction. Additionally, longitudinal waves or folds can be formed in the prestretched portion of the web, which is also undesirable.

Furthermore, in the wrapping of an object in a stretchable plastics film web, and especially material which requires to be tightly wrapped e.g. a straw feed bale which needs to be tightly wrapped with plastics film in order to preserve the feed material, it is essential, as far as possible, to achieve a substantially constant pulling or withdrawing force on the film web, and to maintain a substantially uniform and sufficient width of the film web as it is applied to the object to be wrapped.

The present invention has therefore been developed to provide an improved pre-stretcher device which can deliver pre-stretched film web to an object to be wrapped after having undergone a substantially constant pre-stretching force, despite progressive reduction in film reel diameter. Furthermore, by enabling substantially uniform supply of pre-stretched film web, the properties of the plastics film web can be utilised to best advantage in order to minimise consumption of the plastics material.

The plastics material used for the film reel supply may be, for example, a web of polyamide, polypropylene, PVC, polybutene, polyethylene, or copolymers or mixtures of such materials. The inherent resilience of such materials is such that, upon application of a pre-stretched plastics film web to wrap an object, the web will remain under tension under a force which depends upon the modulus of elasticity of the film web material after stretching, and also on the yield stress of the material.

According to the invention there is provided a pre-stretcher device for controlling the supply of a stretchable plastics film web from a supply reel prior to wrapping of the web around an object, said device comprising a support, an arm pivotally mounted on said support to move about an axis substantially parallel to the longitudinal axis of the reel and in a direction towards the reel axis as the reel reduces in diameter, and a first roller mounted on said arm and arranged so that a web of film can be withdrawn from the reel and be taken at least partly around the roller during travel of the web along a path from the reel to the object to be wrapped by the web, the roller being driven by the web during operation and tending to be moved in a direction towards the axis of the reel ;

characterised by a second roller mounted on said arm at a position intermediate the pivot axis of the arm and said first roller, and engageable with the outer periphery of the film reel in order to exert a braking action on the reel, and by a drive connection between the first driven roller and the second roller which drives the outer periphery of the second roller at a lower circumferential speed than the outer peripheral speed of the first roller so that a film stretching zone is defined on said path of travel of the web between said first roller and the reel.

When the web of plastics film is taken around the first roller, and is withdrawn from the reel during wrapping of an object, the roller tends to be moved in a direction towards the axis of the reel, and therefore the second roller is urged strongly into contact with the outer periphery of the supply reel with a substantial frictional force, in view of the fact that the second roller is located closer to the pivot axis of the arm than the first roller. The first roller is driven by the film web as it passes over it, and by reason of the drive connection between the first and second rollers, the second roller applies a strong braking action on the outer periphery of the supply reel.

There is therefore a short pre-stretching zone for the web which is defined between the reel and the first roller, and therefore any tendency for the width of the web to be reduced is limited, and a substantially constant stretching force is applied, despite reduction in film reel diameter, depending upon the relative peripheral speeds of the rollers.

The energy absorbed in the pre-stretching zone defined between the supply reel and the first roller is sufficient to maintain a steady and stable pre-tension force in the web after application around the objects to be wrapped.

An embodiment of the invention will now be described in detail with reference to the accompanying drawings, in which :

Figure 1 is a diagrammatic plan view of a prestretcher device according to the invention ;

Figure 2 is a side view of the device shown in Figure 1 ;

Figure 3 shows the device of Figures 1 and 2 mounted on a fixed chassis of a bale wrapper apparatus ; and,

Figure 4 is a perspective illustration of a further type of wrapper apparatus with which the device of Figures 1 and 2 can be utilised.

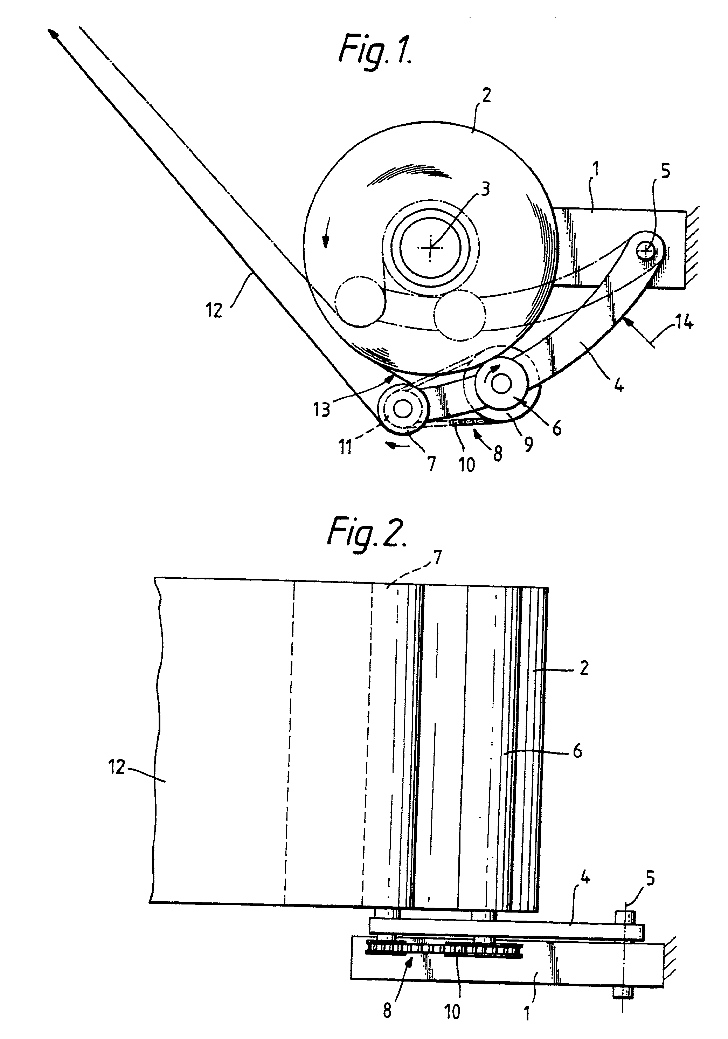

Referring first to Figures 1 and 2 of the drawings, there is shown a pre-stretcher device for controlling the supply of a stretchable plastics film web 12 from a supply reel 2, prior to wrapping of the web around an object. The device comprises a fixed support 1 on which a supply reel 2 of stretchable plastics-film is rotatably mounted to rotate about its vertical longitudinal axis 3 in a manner which is not shown in detail. An arm 4 is pivotally mounted on the support 1 to pivot about a pivot axis 5 which extends substantially parallel to the longitudinal rotational axis 5 of the reel 2. By reason of the pivotal mounting of the arm 4, the latter is able to move in a direction towards the axis 3 of the reel 2 as the reel reduces in diameter during withdrawal of film web 12 therefrom.

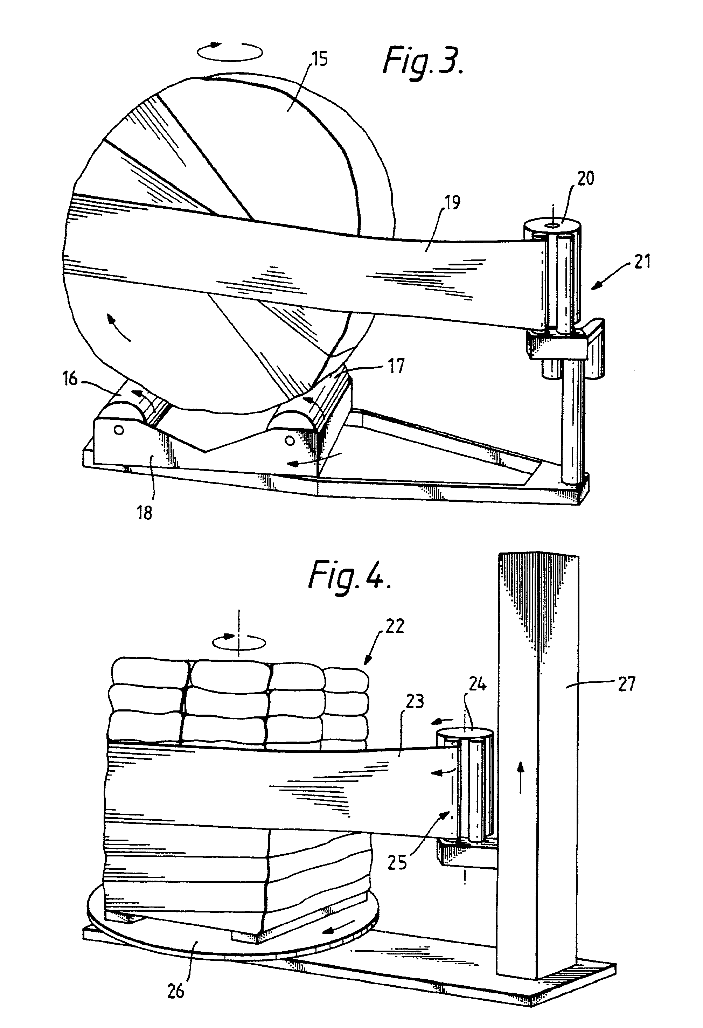

At the free end of arm 4 a first roller 7 is mounted, and is arranged so that the web 12 can be withdrawn from the reel 2 and is taken partly around the roller 7 during travel of the web along a path from the reel 2 to the object to be wrapped by the web e.g. bale 15 as shown in Figure 3, or pallet load 22 as shown in Figure 4, and as described in more detail below.

The roller 7 is freely rotatable on arm 4, and is driven by the web 12 during the withdrawal of the web 12 to be wrapped around the object, and by reason of the path of travel, as shown in Figure 1, the roller 7 tends to be moved in a direction towards the axis 3 of the reel 2.

A second roller 6 also is mounted on the arm 4 at a position intermediate the pivot axis 5 of the arm 4 and the first roller 7, and is engageable with the outer periphery of the film reel 2 in order to exert a braking action on the reel.

As indicated above, the first roller 7 is driven by the web 12, and a drive connection is provided between the driven roller 7 and the second roller 6, which drives the outer periphery of the second roller 6 at a lower circumferential speed than the outer peripheral speed of the first roller 7, so that a film stretching zone 13 is defined along the portion of the path of travel of the web 12 which lies between the first roller 7 and the reel 2. Rollers 6 and 7 are therefore coupled together by means of a chain drive system comprising a small sprocket 11 coupled with roller 7, a larger-sprocket 9 coupled with roller 6, and a chain 10 which is in mesh with the sprockets 11 and 9.

The film web 12 is withdrawn from supply reel 2, and is taken around roller 7, and during operation roller 7 is pulled in a direction towards the axis 3 of the reel 2 by pivoting about pivot axis 5, and therefore second roller 6 is pressed into firm frictional contact with the outer periphery of the reel 2. The roller 7 is rotated in the direction of the arrow shown in Figure 1, by the travel of the web 12, and second roller 6 applies a frictional braking force to the outer periphery of the reel 2 by reason of its forced rotation in the direction of its arrow shown in Figure 1, under the action of the drive connection from first roller 7, with roller 6 rotating with a lower peripheral speed than the peripheral speed of roller 7.

Therefore, a relatively short pre-stretching zone 13 is formed, and throughout which an approximately constant pre-stretching force is applied to the web 12, despite progressive reduction in film reel diameter, with the prestretching force depending upon the relative outer peripheral speeds of rollers 6 and 7.

Figure 1 shows in dashed outline a position to which arm 4 and rollers 6 and 7 can move during withdrawal of the web 12, and throughout this operation, roller 7 moves along an arcuate path about pivot axis 5 in such a way that the length of the pre-stretching zone 13 remains substantially constant. The geometry of the system is therefore selected to achieve a substantially constant length of the pre-stretching zone 13 during reduction in diameter of the reel 2, and this can readily be achieved for any particular size of machine by suitable testing.

A spring (not shown) applies a force to arm 4, as shown diagrammatically by reference 14 in Figure 1, which urges the entire arm assembly in a direction towards the axis 3.

Referring now to Figure 3, this shows one example of use of the pre-stretcher device of Figure 1 and 2 to a bale wrapper apparatus, in which a straw bale 15 is mounted on a platform or table 18 which can rotate about a substantially vertical axis, and which has a pair of laterally spaced driven rollers 16 and 17 on which the bale 15 rests, and which can be operated to rotate the bale 15 about a substantially horizontal axis. By virtue of the combined rotations of the bale 15 about both vertical and horizontal axes simultaneously, a web 19 of stretchable plastics film can be withdrawn from a supply reel 20 in order to provide helically overlapping windings around the bale 15 until such time as wrapping has been completed. In Figure 3, the pre-stretcher device is designated generally by reference 21, and is constructed and arranged to operate in the manner described above with reference to Figures 1 and 2.

In Figure 4, there is shown a pre-stretcher device 25 which can be used to apply wrapping around a pallet load 22 mounted on a disc 26 which is rotatable about the vertical axis. Film web 23 is withdrawn from a supply reel 24, and means (not shown in detail) is provided to raise and lower the pre-stretcher device 25 along a support column 27.

## Claims

1. A pre-stretcher device for controlling the supply of a stretchable plastics film web from a supply reel (2) prior to wrapping of the web around an object (15), said device comprising a support (1), an arm (4) pivotally mounted on said support (1) to move about an axis (5) substantially parallel to the longitudinal axis (3) of the reel (2) and in a direction towards the reel axis (3) as the reel reduces in diameter, and a first roller (7) mounted on said arm (4) and arranged so that a web (12) of film can be withdrawn from the reel (2) and be taken at least partly around the roller (7) during travel of the web (12) along a path from the reel (2) to the object (15) to be wrapped by the web, the roller (7) being driven by the web (12) during operation and tending to be moved in a direction towards the axis (3) of the reel (2) ;

characterised by a second roller (6) mounted on said arm (4) at a position intermediate the pivot axis (5) of the arm (4) and said first roller (7), and engageable with the outer periphery of the film reel (2) in order to exert a braking action on the reel, and by a drive connection (8, 9, 10) between the first driven roller (7) and the second roller (6) which drives the outer periphery of the second roller (6) at a lower circumferential speed than the outer peripheral speed of the first roller (7) so that a film stretching zone (13) is defined on said path of travel of the web (12) between said first roller (7) and the reel (2).

2. A device according to Claim 1, characterised in that the first roller (7) is movable along an arcuate path about said pivot axis (5) of the arm (4) such that the length of the stretching zone (13) remains substantially constant during reduction in diameter of the reel (2).

3. A device according to Claim 1 or 2, characterised in that the drive connection includes a drive chain (10).

4. A device according to Claim 3, characterised in that the drive connection includes a small sprocket (11) coupled with said first roller (7) and a larger sprocket (9) coupled with said second roller (6).

5. A device according to any one of Claims 1 to 4, characterised in that said first and second rollers have frictional coatings of soft material.

6. A device according to any one of Claims 1 to 5, characterised by a spring (14) arranged to urge said arm (4) to pivot about said arm axis (5) in a direction towards the axis (3) of the reel (2).

## Patentansprüche

1. Vorstreckeinrichtung zur Steuerung des Vorrates einer streckbaren Kunststoff-Folienbahn von einer Vorratsrolle (2) vor dem Wickeln der Bahn um einen Gegenstand (15), wobei die Einrichtung eine Halterung (1), einen schwenkbar auf der Halterung (1) befestigten Arm (4) zur Bewegung um eine Achse (5), die sich bei Verringerung des Durchmessers der Vorratsrolle im wesentlichen parallel zur Längsachse (3) der Vorratsrolle (2) und in einer Richtung auf die Rollenachse (3) bewegt, sowie eine erste Rolle (7) aufweist, die am Arm (4) befestigt und so angeordnet ist, daß eine Bahn (12) der Folie von der Vorratsrolle (2) abgezogen und während der Bewegung der Bahn (12) entlang eines Verlaufes von der Vorratsrolle (2) zum Gegenstand (15) zum Umwickeln mittels der Bahn zumindest teilweise um die Rolle (7) gelegt wird, wobei die Rolle (7) im Betrieb von der Bahn (12) angetrieben wird und die Neigung hat, in Richtung auf die Achse (3) der Vorratsrolle (2) bewegt zu werden : **gekennzeichnet** durch eine zweite Rolle (6), die am Arm (4) in einer Stellung zwischen der Schwenkachse (5) des Arms (4) und der ersten Rolle (7) befestigt und in Eingriff mit dem äußeren Umfang der Vorratsrolle (2) bringbar ist, um auf die Vorratsrolle eine Bremswirkung auszuüben, und durch eine Antriebsverbindung (8, 9, 10) zwischen der ersten angetriebenen Rolle (7) und der zweiten Rolle (6), die den äußeren Umfang der zweiten Rolle (6) mit einer geringeren Umfangsgeschwindigkeit als die äußere Umfangsgeschwindigkeit der ersten Rolle (7) antreibt, so daß im Verlauf der Bewegung der Bahn (12) zwischen der ersten Rolle (7) und der Vorratsrolle (2) ein Folienstreckbereich (13) gebildet wird.

2. Einrichtung nach Anspruch 1, **dadurch gekennzeichnet,** daß die erste Rolle (7) entlang einer gekrümmten Bahn um die Schwenkachse (5) des Arms (4) bewegbar ist, so daß die Länge des Streckbereiches (13) während der Verringerung des Durchmessers der Vorratsrolle (2) im wesentlichen konstant bleibt.

3. Einrichtung nach Anspruch 2, **dadurch gekennzeichnet,** daß die Antriebsverbindung eine Antriebskette (10) aufweist.

4. Einrichtung nach Anspruch 3, **dadurch gekennzeichnet,** daß die Antriebsverbindung ein kleines Kettenrad (11), das mit der ersten Rolle (7) gekoppelt ist, und ein größeres Kettenrad (9) aufweist, das mit der zweiten Rolle (6) gekoppelt ist.

5. Einrichtung nach einem der Ansprüche 1 bis 4, **dadurch gekennzeichnet,** daß die ersten und zweiten Rollen Reibbeschichtungen aus weichem Material aufweisen.

6. Einrichtung nach einem der Ansprüche 1 bis 5, **gekennzeichnet durch** eine Feder (14), die angeordnet ist, um den Arm (4) zur Verschwenkung um die Armachse (5) in Richtung auf die Achse (3) der Vorratsrolle (2) zu belasten.

**Revendications**

1. Dispositif de préétirage servant à commander l'envoi d'une bande formée d'un film plastique étirable à partir d'une bobine débitrice (2) avant l'enroulement de la bande autour d'un objet (15), ledit dispositif comprenant un support (1), un bras (4) monté pivotant sur ledit support (1) pour se déplacer autour d'un axe (5) sensiblement parallèle à l'axe longitudinal (3) de la bobine débitrice (2) et en direction de l'axe (3) de la bobine lorsque le diamètre de cette dernière diminue, et un premier rouleau (7) monté sur ledit bras (4) et agencé de manière qu'une bande (12) du film peut être tirée de la bobine (2) et s'enrouler au moins partiellement autour du rouleau (7) pendant le déplacement de la bande (12) le long du trajet s'étendant de la bobine (2) jusqu'à l'objet (15) devant être enroulé par la bande, le rouleau (7) étant entraîné par la bande (12) pendant le fonctionnement et tendant à être déplacé en direction de l'axe (3) de la bobine (2) ; caractérisé par un second rouleau (6) monté sur ledit bras (4) dans une position située entre l'axe de pivotement (5) du bras (4) et ledit premier rouleau (7) et pouvant venir en contact avec la périphérie extérieure de la bobine (2) du film de manière à appliquer une action de freinage de la bobine, et par une liaison motrice (8, 9, 10) disposée entre le premier rouleau entraîné (7) et le second rouleau (6) qui entraîne le pourtour extérieur du second rouleau (6) à une vitesse circonférentielle inférieure à la vitesse circonférentielle extérieure du premier rouleau (7) de sorte qu'une zone (13) d'étirage du film est définie sur ledit trajet de déplacement de la bande (12) entre ledit premier rouleau (7) et la bobine (2).

2. Dispositif selon la revendication 1, caractérisé en ce que le premier rouleau (7) est déplaçable le long d'un trajet courbe autour dudit axe de pivotement (5) du bras (4) de sorte que la longueur de la zone d'étirage (13) reste sensiblement constante pendant la réduction du diamètre de la bobine (2).

3. Dispositif selon la revendication 1 ou 2, caractérisé en ce que la liaison motrice comprend une chaîne d'entraînement (10).

4. Dispositif selon la revendication 3, caractérisé en ce que la liaison motrice comprend une petite roue dentée (11) accouplée audit premier rouleau (7), et une roue dentée plus grande (9) accouplée audit second rouleau (6).

5. Dispositif selon l'une quelconque des revendications 1 à 4, caractérisé en ce que lesdits premier et second rouleaux possèdent des revêtements de friction formés d'un matériau mou.

6. Dispositif selon l'une quelconque des revendications 1 à 5, caractérisé par un ressort (14) disposé de manière à repousser ledit bras (4) de manière qu'il pivote autour dudit axe (5) en direction de l'axe (3) de la bobine (2).

## Fig.1.

## Fig.2.

6

*Fig.3.*

*Fig.4.*